(19) Europäisches Patentamt
European Patent Office
Office européen des brevets

(11) Veröffentlichungsnummer: **0 438 711 A2**

(12) **EUROPÄISCHE PATENTANMELDUNG**

(21) Anmeldenummer: **90124096.0**

(22) Anmeldetag: **13.12.90**

(51) Int. Cl.[5]: **C08G 77/62**, C04B 35/58

(30) Priorität: **18.01.90 DE 4001246**

(43) Veröffentlichungstag der Anmeldung: **31.07.91 Patentblatt 91/31**

(84) Benannte Vertragsstaaten: **AT BE CH DE FR GB IT LI NL SE**

(71) Anmelder: **BAYER AG**
**W-5090 Leverkusen 1 Bayerwerk(DE)**

(72) Erfinder: **Jansen, Martin, Prof. Dr.**
**Zur Marterkapelle 93**
**W-5300 Bonn(DE)**
Erfinder: **Andersch, Helga, Dipl.-Chem.**
**Effertzstrasse 12**
**W-5300 Bonn(DE)**
Erfinder: **Baldus, Hans Peter, Dr.**
**Weidenweg 39**
**W-5093 Burscheid(DE)**

(54) **Polymere Silazane, Verfahren zu ihrer Herstellung sowie deren Verwendung.**

(57) Die Erfindung betrifft neue Polysilazane, in denen das Silicium vierfach durch Stickstoff koordiniert ist, ihre Herstellung, ihre Weiterverarbeitung zu Siliciumnitrid enthaltenden keramischen Materialien sowie deren Herstellung. Zur Herstellung der Polysilazane werden monomere Aminosilane der Formel $Si(NHR)_4$ und cyclische Silazane der allgemeinen Formel -(NR, NR'Si-NR'')- durch thermische Behandlung oder durch Behandlung mit starken Lewisbasen polymerisiert. Die Polysilazane können dann zu Siliciumnitrid enthaltendem keramischen Material pyrolysiert werden. Die erfindungsgemäßen Polysilazane lösen sich in den üblichen aprotischen Lösungsmitteln.

EP 0 438 711 A2

# POLYMERE SILAZANE, VERFAHREN ZU IHRER HERSTELLUNG SOWIE DEREN VERWENDUNG

Die vorliegende Erfindung betrifft polymere Silazane der allgemeinen Strukturformel $[(RN)_3\text{-Si-NR}]_n$, wobei jedes Siliciumatom durch vier Stickstoffatome koordiniert ist, Verfahren zur Herstellung dieser polymeren Silazane sowie deren Verwendung.

Zur Zeit besteht ein großes Interesse an präkeramischen polymeren Materialien, die durch Pyrolyse in Siliciumnitrid, Silciumcarbid und andere keramische Materialien auf Siliciumbasis überführt werden können, Diese Materialien besitzen unter anderem den Vorteil, daß die Kristallisation der amorphen Pyrolysate zu homogenen Gefügen mit sehr kleinen Kristallitgrößen führt, die bei den zur Zeit in großen Umfang in der Industrie angewendeten Pulvermethoden nicht erreicht werden können.

Für solche Polymere gibt es eine Vielzahl von Anwendungsmöglichkeiten, unter anderem folgende:

1. Herstellung von komplexen Formkörpern mit anschließender Pyrolyse des Polymeren, wodurch man eine Keramik der gleichen Form erhält;
2. Herstellung von Fasern oder Fäden mit anschließender Pyrolyse;
3. Als Binder für keramische Pulver oder als Matrixmaterial für keramische- oder Kohlenstoffasern;
4. Oxidationsunempfindliche Beschichtungen auf oxidationsempfindlichen Materialien durch Aufbringen einer Polymerbeschichtung und anschließender Pyrolyse;
5. Verdichtung von porösen keramischen Körpern durch Behandlung mit einer Lösung des Polymers und anschließender Pyrolyse;
6. Herstellung von dünnen Filmen für optische und elektronische Anwendungen;

Verschiedene Wege zur Herstellung von keramischen Materialien durch Polyorganosilazane sind in der Literatur beschrieben, so in der US-A 3 853 567, US-A 3 892 583, US-A 4 482 669 A, DE 3 641 958 A1 und in EP 0 315 907 A2.

Typischerweise werden diese Polysilazane durch die Reaktion von Halogensilanen mit Ammoniak [J. Am. Ceram. Soc. 67, 132 (1984)], oder durch Reaktion von Alkylhalogensilanen mit Ammoniak [J. Poly. Sci. A2 3179-3189 (1984)], primären Aminen [Acta. Chem. Scand. 13, 29-34 (1959)] und Diaminen [J. Poly. Sci. A2 44-55 (1964)] oder mit aus den genannten Ausgangsprodukten gewonnenen Silazanen hergestellt.

Aufgrund der Verwendung eines halogenhaltigen Silans bei der Synthese des Polysilazans entsteht bei der Aminierungsreaktion neben dem gewünschten Silazan immer ein Hydrohalogenid als Nebenprodukt.

Die oben beschriebenen Reaktionen benötigten alle sehr zeitaufwendige und kostenintensive Reinigungsschritte zur Abtrennung der halogenhaltigen Nebenprodukte. Trotzdem gelingt diese Abtrennung meistens nur unvollständig, so daß in den Pyrolyseprodukten immer noch Halogenide vorhanden sind, die die Sintereigenschaften dieser Keramiken nachteilig beeinflußen. Das SiC- zur $Si_3N_4$-Verhältnis in den nach den oben genannten Vorschriften hergestellten keramischen Materialien ist aufgrund der Zusammensetzung der verwendeten polymeren Silazane viel größer als eins, was ebenfalls zu unerwünschten Werkstoffeigenschaften führt.

Es ist ebenfalls bekannt, daß man durch Reaktion von $SiCl_4$ mit Methylamin monomere oder oligomere Silazane (n = 2, 3) mit vierfach durch Stickstoff koordiniertem Silicium herstellen kann [Adrianov et al., Vsokomol. Soedin., Ser. A18(12), (1976) 2752-2757].

In der US-A 4 725 660 wird ein Verfahren beschrieben, in dem das nach obiger Vorschrift in Methylenchlorid als Lösungsmittel dargestellte Tetrakis-(methylamino)silan $Si(NHCH_3)_4$ mit Ammoniak zu viskosen polymeren Silazanen umgesetzt wird, wobei alle Methylaminogruppen durch NH-Gruppen ersetzt werden. Diese Silazane werden anschließend zu Siliciumnitrid enthaltendem Material pyrolysiert.

Nacharbeiten zeigen jedoch, daß es sich bei der in der US-A 4 725 660 als Ausgangsverbindungen angegebenen Verbindung $Si(NHCH_3)_4$ nicht um die reine Verbindung, sondern um ein chlorhaltiges Produktgemisch handelt. Bei der Polymerisation dieses Silazangemisches mit Ammoniak entstehen jedoch immer viskose bis hochviskose Polysilazane, die nur schwer zu verarbeiten sind und sich deshalb zur Faserherstellung nicht eignen.

Aufgabe der vorliegenden Erfindung ist es, aus billigen Grundchemikalien in hohen Ausbeuten darstellbare feste Polysilazane zur Verfügung zu stellen, die die beschriebenen Nachteile nicht aufweisen.

Diese Anforderungen werden erfüllt durch polymere Silazane der allgemeinen Strukturformel $[(RN)_3\text{-Si-NR}]_n$,wobei jedes Siliciumatom durch vier Stickstoffatome koordiniert ist, welche dadurch gekennzeichnet sind, daß jedes Stickstoffatom einen organischen Rest R trägt, worin R = $C_1$-$C_6$-Alkyl, Vinyl, Phenyl oder halogenierte Varianten sind und n Werte von größer als 2 ist.

In einer bevorzugten Ausführungsform weisen die erfindungsgemäßen polymeren Silazane einen Chloridgehalt < 10 ppm auf.

Gegenstand dieser Erfindung ist auch ein Verfahren zur Herstellung der erfindungsgemäßen polymeren

Silazane, welches dadurch gekennzeichnet ist, daß ein Tetraorganylaminosilan der Formel $Si(NHR)_4$, worin R = $C_1$-$C_6$-Alkyl, Vinyl, Phenyl oder halogenierte Varianten bei 50-600 °C, bevorzugt bei 150-250 °C, in inerter Gasatmosphäre polymerisiert wird.

Es ist ebenso vorteilhaft, daß zur Herstellung der polymeren Silazane eine Silazanverbindung - der allgemeinen Formel $[(NR,NR',NR'')Si\text{-}NR''']_n$ verwendet wird, worin R,R', R" Alkylgruppen, halogenierte Alkylgruppen und Phenylgruppen bedeuten und n mindestens gleich 2 ist.

Eine bevorzugte Ausführungsform der erfindungsgemäßen Verfahren ist dadurch gekennzeichnet, daß die zur Synthese der polymeren Silazane verwendeten monomeren und oligomeren Vorprodukte durch Umsetzung von Tetrahalogensilanen mit mindestens 8 Mol eines primären Amins pro Mol Silan in einem Petrolether bei Temperaturen von -80 °C bis -5 °C erhalten werden.

Das Molverhältnis von $SiCl_4$ zu Alkylamin sollte bei mindestens 1:8, vorzugsweise 1:10 liegen. Dann wird eine vollständige Trennung von Lösungsmittel und den monomeren Silanen gewährleistet, die anschließend durch Sublimation oder Destillation abhängig vom verwendeten Alkylamin gereinigt werden und in kristalliner oder flüssiger Form anfallen. Die im Precursor vorgeprägte Struktur führt zu $Si_3N_4$/SiC-Keramiken mit großem $Si_3N_4$-Anteil, wobei man den SiC-Anteil durch die Wahl des primären Amins in gewissen Grenzen variieren kann. Eine Vergrößerung des organischen Anteils in den Polymeren erlaubt eine Variation der Viskosität und somit eine Optimierung der Verspinnbarkeit.

Diese einfach und in reiner Form darstellbaren Aminosilane werden dann erfindungsgemäß durch Polymerisation zwischen 50 und 600 °C mittels thermischer und/oder katalytischer Behandlung in die erfindungsgemäßen Polysilazane überführt.

Dabei polymerisieren die Aminosilane unter Abspaltung von primären Aminen. Je nach der Polymerisationstemperatur, vorzugsweise 150-250 °C, und dem verwendeten Katalysator erreicht man nach zwei Stunden bis drei Tagen eine vollständige Vernetzung.

Gemäß einer bevorzugten Ausführungsform des erfindungsgemäßen Verfahrens wird die Polymerisation mit Hilfe von Übergangsmetallcarbonylen oder Lithiumaluminiumhydrid als Katalysator durchgeführt.

Die Polymerisation von Silanen mit Übergangsmetallcarbonylen ist beispielsweise in der Angewandten Chemie 101 1989 Nr. 2 S. 206 beschrieben. Hier wurden Eisencarbonyle als Katalysator verwendet. Nach Abschluß der Polymerisation sind die Intensitäten der N-H-Signale in der IR- bzw. NMR-Spektren der so erhaltenen Polysilazane vernachlässigbar klein.

Die allgemeine Struktur dieser polymeren Silazane läßt sich demnach folgendermaßen beschreiben:

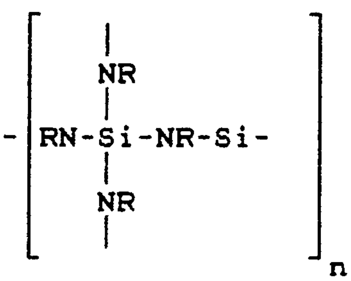

Sie besitzen je nach Katalysator, Polymerisationsdauer und -temperatur Molmassen zwischen 800 und 10000 g/Mol und sind in der herkömmlichen Lösungsmitteln wie Petrolether, Chlorkohlenwasserstoffen und Aromaten löslich.

Die Strukturformel der erfindungsgemäßen Polysilazane zeigt, daß ihr relativer Gehalt an Stickstoff zwangsläufig hoch ist: das Verhältnis von Silicium zu Stickstoff beträgt 1:2. In $Si_3N_4$ beträgt dieses Verhältnis 1:1,333, so daß sich durch Abspaltung von Amin bei der Pyrolyse der Polysilazane das für die Siliciumnitridkeramikrichtige Verhältnis leicht einstellen kann. Dadurch wird verhindert, daß sich bei der Pyrolyse elementares Silicium bildet, was ein großer Nachteil des in der US-A 4 397 828 beschriebenen Verfahren ist.

Gegenstand dieser Erfindung ist somit auch die Verwendung der erfindungsgemäßen polymeren Silazane zur Herstellung von keramischem Material auf $Si_3N_4$-Basis durch Pyrolyse in inerter oder $NH_3$-haltiger Atmosphäre bei Temperaturen von 800 bis 1800 °C.

Da die erfindungsgemäßen Polysilazane in einer Vielzahl organischer Lösungsmittel löslich sind, lassen sie sich auch in Form einer Lösung zu geeigneten Formkörpern wie z.B. Fasern, Folien, oder Beschichtungen verarbeiten.

Gegenstand dieser Erfindung ist somit weiterhin auch die Verwendung der erfindungsgemäßen polymeren Silazane zur Herstellung von Siliciumnitridenthaltenden Fasern. Dies geschieht nach an sich bekannten Verfahren.

Gegebenenfalls müssen sie erhaltenen Formkörper vor der eigentlichen Pyrolyse einer physikalischen Vorbehandlung unterzogen werden, die den Zweck hat, das Silazanharz unschmelzbar zu machen.

Im folgenden ist die Erfindung beispielhaft erläutert, ohne daß hierin eine Einschränkung zu sehen ist.

Beispiel 1

100 ml Methylamin werden in einem evakuierten 500 ml-Dreihalskolben mit 500 ml Tropftrichter ohne Druckausgleichsrohr bei -78° C einkondensiert. Anschließend gibt man 10 ml (87,1 mmol) $SiCl_4$, gelöst in 250 ml Petrolether, unter starkem Rühren so zu, daß die Innentemperatur nicht über -20° C ansteigt. Der Feststoff, der im wesentlichen aus Methylaminhydrochlorid besteht, wird mit einer Umkehrfritte abfiltriert. Von der klaren Pentanlösung wird das Lösungsmittel abgesaugt und der zurückgebliebene Feststoff destillativ bei 0,1 mbar fraktioniert.

Ausbeute bezogen auf 10 ml $SiCl_4$:
$Si(NHCH_3)_4$: 11,8 g (93 % d.Th.)
$C_9H_{33}N_9Si_3$: 0,2 g (2 % d.Th.)

Tabelle 1: Physikalische Daten von monomeren Aminosila
(1) und Cyclotrisilazan (2)

| Produkt | Ausbeute | Schmelzp. | Siedep. |
|---|---|---|---|
| $Si(NHCH_3)_4$ | 93 % d.Th. | 43,1° C | 172,3° $C_{1013\ mbar}$ |
| $C_9H_{33}N_9Si_3$ | 2 % d.Th. | 143,2° C | 120,0° $C_{0,1mbar}$ |

Die Struktur und die Zusammensetzung der Verbindungen (1) und (2) wurden durch massenspektrometrische und $^1H$-NMR-Messungen sowie durch eine Kristallstrukturanalyse aufgeklärt.

a) $Si(NHCH_3)_4$
Kristallsystem tetragonal, Raumgruppe $I4_1/n$ a=b=630 pm c=1180 pm, $\alpha=\beta=Y=90°$ C, V=871,7.10$^6$ pm,Z=4, $D_x$=1,128 g/cm$^3$
$^1H$-NMR: $\delta_{CH3}$ = 2,45 ppm, $\delta_{NH}$ = 0,6 ppm, MS: $M^+$ = 148

b) $C_9H_{33}N_9Si$
Kristallsystem monoklin, Raumgruppe $P2_1/n$, a = 873,7(2) pm, b = 1433,6(3) pm, c = 1620,0(3) pm, $\beta$ = 97,20(6)°, V = 2003(4)• 10$^6$ pm, $D_x$ = 1,161 g/cm$^3$,
$^1H$-NMR: $\delta_{CH3}$ = 2,42 u. 2,47 ppm, $\delta_{NH}$ = 0,7 ppm, MS: $M^+$ = 351,5.

Beispiel 2

10 g $Si(NHCH_3)_4$ werden in einem 100 ml Kolben unter Schutzgasatmosphäre langsam innerhalb von 10 Stunden von Raumtemperatur auf 250° C erwärmt. Unter Abspaltung von Methylamin entsteht ein weißes bis hellgelbes sprödes Harz (5,9 g). Dieses Harz wird durch Vakuum bei 20° C von geringen Mengen an flüchtigen Bestandteilen befreit. Das $^1H$-NMR zeigt folgende chemischen Verschiebungen:
N-$CH_3$: $\delta$ = 3,2 - 3,4 ppm, Intensität 30
N-H : $\delta$ = 0,6 - 1,2 ppm, Intensität 0,01
Keramische Ausbeute nach der Pyrolyse 72 %

Beispiel 3

10 g $Si(NHCH_3)_4$, gelöst in 500 ml Diethylether, werden zusammen mit 0,5 g $LiAlH_4$ in einer Schutzgasatmosphäre 3 Tage unter Rückfluß gekocht. Die festen Bestandteile werden abgesaugt und das Lösungsmittel bei reduziertem Druck abgezogen. Es wird ein klarer Feststoff erhalten (6,3 g).

Das $^1$H-NMR in $CDCl_3$ zeigte die folgenden chemischen Verschiebungen:
N-$CH_3$: $\delta$ = 2,5 - 3,5 Intensität: 16,5
N-H : $\delta$ = 0,7 - 1,4 Intensität: 0,02
Keramische Ausbeute nach der Pyrolyse 70 %

## Patentansprüche

1. Polymere Silazane der allgemeinen Strukturformel $[(RN)_3\text{-Si-NR}]_n$, wobei jedes Siliciumatom durch vier Stickstoffatome koordiniert ist, dadurch gekennzeichnet, daß jedes Stickstoffatom einen organischen Rest R trägt, worin R = $C_1$-$C_6$-Alkyl, Vinyl, Phenyl oder halogenierte Varianten sind und n Werte von größer als 2 ist.

2. Polymere Silazane gemäß Anspruch 1, dadurch gekennzeichnet, daß sie einen Chloridgehalt < 10 ppm aufweisen.

3. Verfahren zur Herstellung der polymeren Silazane gemäß einem der Ansprüche 1 oder 2, dadurch gekennzeichnet, daß ein Tetraorganylaminosilan der Formel $Si(NHR)_4$, worin R = $C_1$-$C_6$-Alkyl, Vinyl, Phenyl oder halogenierte Varianten bei 50-600 °C, bevorzugt bei 150-250 °C, in inerter Gasatomosphäre polymerisiert wird.

4. Verfahren zur Herstellung der polymeren Silazane gemäß einem der Ansprüche 1 oder 2, dadurch gekennzeichnet, daß zur Herstellung der polymeren Silazane eine Silazanverbindung - der allgemeinen Formel $-[(NR, NR')Si\text{-}NR'']_n-$ verwendet wird, worin R, R', R" Alkylgruppen, halogenierte Alkylgruppen und Phenylgruppen bedeuten und n mindestens gleich 2 ist.

5. Verfahren gemäß einem der Ansprüche 3 oder 4, dadurch gekennzeichnet, daß die zur Synthese der polymeren Silazane verwendeten monomeren und oligomeren Vorprodukte durch Umsetzung von Tetrahalogensilanen mit mindestens 8 Mol eines primären Amins pro Mol Silan in einem Lösungsmittel bei Temperaturen von -80 °C bis -5 °C erhalten werden.

6. Verfahren zur Herstellung von polymeren Silazanen gemäß einem oder mehreren der Ansprüche 3 - 5, dadurch gekennzeichnet, daß die Polymerisation mit Hilfe von Übergangsmetallcarbonylen oder Lithiumaluminiumhydrid als Katalysator durchgeführt wird.

7. Verwendung der polymeren Silazane gemäß einem oder mehreren der Ansprüche 1 bis 6 zur Herstellung von keramischen Material auf $Si_3N_4$-Basis durch Pyrolyse in inerter oder $NH_3$-haltiger Atmosphäre bei Temperaturen von 800 bis 1800 °C.

8. Verwendung der polymeren Silazane gemäß einem oder mehreren der Ansprüche 1 bis 6 zur Herstellung von Siliziumnitrid enthaltenden Fasern.